# EUROPÄISCHE PATENTSCHRIFT

(11) **EP 2 086 780 B1**
(45) Veröffentlichungstag und Bekanntmachung des Hinweises auf die Patenterteilung: **23.02.2011**
(21) Anmeldenummer: 07819113.7
(22) Anmeldetag: 18.10.2007
(51) Int. Cl.: B60J 5/04, B60J 10/08

(54) **FAHRZEUGTÜR MIT DICHTEBENE UND EINEM DICHTELEMENT, DESSEN ENDEN SICH ÜBERLAPPEN**
VEHICLE DOOR HAVING A SEALING PLANE AND HAVING A SEALING ELEMENT WHOSE ENDS OVERLAP
PORTE DE VÉHICULE AVEC UN PLAN D'ÉTANCHÉITÉ ET AVEC UN ÉLÉMENT D'ÉTANCHÉITÉ DONT LES EXTRÉMITÉS SE CHEVAUCHENT

(30) Priorität: 18.10.2006 DE 102006049679
(43) Veröffentlichungstag der Anmeldung: 12.08.2009
(73) Patentinhaber: Johnson Controls Interiors GmbH & Co. KG, 47929 Grefrath (DE)
(72) Erfinder: MEYER, Thorsten, 47798 Krefeld (DE)
(74) Vertreter: Schwöbel, Karl T.
(86) Internationale Anmeldenummer: PCT/EP2007/009048
(87) Internationale Veröffentlichungsnummer: WO 2008/046623

(56) Entgegenhaltungen:
- DE-A1-102005 044 114
- DE-U1- 20 111 904

## Beschreibung

Die Erfindung betrifft eine Fahrzeugtür nach dem Oberbegriff vom Anspruch 1.

Solche Fahrzeugtüren sind allgemein bekannt. So beschreibt beispielsweise die Gebrauchsmusterschrift DE 201 11 904 U1 eine Dichtungsanordnung für eine Fahrzeugtür mit einem längserstreckten Dichtungselement. Das Dichtungselement befindet sich dabei auf einer Abdeckung und die Endabschnitte des Dichtungselements überlappen sich.

Nachteilig bei einer solchen Fahrzeugtür ist, dass für eine Verbindung zwischen einem Nassbereich einer Fahrzeugtür und dem Trockenbereich der Fahrzeugtür Löcher in der Abdeckung vorhanden sein müssen. Diese Löcher oder Aussparrungen müssen dann wieder aufwendig abgedichtet werden. Des weiteren ist die Herstellung der Abdeckung aufwendig, da die Löcher oder Aussparungen bei der Fertigung der Abdeckung ausgestanzt oder durch andere Arbeitsschritte berücksichtigt werden müssen

Es war Aufgabe der vorliegenden Erfindung, eine Fahrzeugtür mit einer Dichtebene und einem Dichtelement anzugeben, welche die Nachteile der aus dem Stand der Technik bekannten Fahrzeugtüren nicht aufweist. Trotzdem soll die erfindungsgemäße Fahrzeugtür unkompliziert im Aufbau sein und eine schnelle Montage ermöglichen.

Gelöst wird die Aufgabe mit einer Fahrzeugtür mit Dichtebene, wobei durch die Dichtebene ein Nassbereich der Fahrzeugtür von einem Trockenbereich der Fahrzeugtür getrennt ist, und wobei die Dichtebene ein langgestrecktes Dichtelement aufweist oder das Dichtelement an der Dichtebene befestigt ist. Die Enden des langgestreckten Dichtelements überlappen sich im wesentlichen, wobei zwischen den überlappenden Enden des langgestreckten Dichtelements ein Funktionselement geführt wird.

Durch die Erfindung ist es vorteilhaft möglich, ein Funktionselement von einem Nassbereich in einen Trockenbereich zu überführen, ohne dass hierfür Ausnehmungen oder Löcher in der Dichtebene vorgesehen sein müssen. Hierdurch wird die Fertigung der Dichtebene besonders unkompliziert, da im wesentlichen nur ein Bauteil ohne weitere Bearbeitungsschritte, wie beispielsweise das Ausstanzen von Löchern, gefertigt werden muss. Des weiteren fällt die Abdichtung der Aussparungen oder Löcher weg. Es wird hierbei einerseits Arbeitszeit gespart, aber andererseits ist auch die Gefahr von schadhaften Abdichtungen der Aussparungen oder Löcher nicht gegeben.

Unter einer Dichtebene soll ein Bauteil verstanden werden, das zwischen der Karosserie einer Fahrzeugtür und der Innenverkleidung der Fahrzeugtür angebracht wird. Vorzugsweise ist die Dichtebene aus einem wasserundurchlässigen Material gefertigt und grenzt den Nassbereich einer Fahrzeugtür von einem Trockenbereich ab.

Der Nassbereich einer Fahrzeugtür befindet sich in der Karosserie und ist der Bereich in der Fahrzeugtür, in den Wasser eintreten kann. Der Trockenbereich einer Fahrzeugtür beginnt mit der Dichtebene und der Innenverkleidung einer Fahrzeugtür. In diesem Bereich soll weder Wasser von außerhalb der Fahrzeugtür noch Wasser, das sich im Nassbereich befindet, eindringen können.

Besonders bevorzugt ist die Dichtebene als durchgehendes Bauteil gefertigt. Darunter soll verstanden werden, dass die Dichtebene weder Löcher noch Aussparungen aufweist, sondern im wesentlichen aus einem durchgehenden Material besteht. Die Herstellung der Dichtebene wird hierbei vereinfacht, da keine Nachbearbeitung, wie beispielsweise das Ausstanzen der Löcher oder Kanten der Löcher abschleifen, erfolgen muss. Denkbar ist jedoch auch, dass die Dichtebene kleine Löcher zur Befestigung der Dichtebene an der Karosserie und/oder der Türinnenverkleidung aufweist. Hierbei soll jedoch verstanden werden, dass diese Löcher einen wesentlich geringeren Durchmesser aufweisen, als Aussparungen und Löcher die zur Durchführung eines Funktionselements verwendet würden. Eine Abdichtung der Löcher ist dabei nicht nötig oder mit wesentlich geringeren Aufwand verbunden als die Abdichtung bei einer Aussparung, durch die ein Kabel geführt wird.

Bevorzugt umfasst das Funktionselement, welches sich zwischen den überlappenden Enden des Dichtelements befindet, mindestens ein Kabel. Besonders bevorzugt befindet sich zwischen den überlappenden Enden des Dichtelements ein Kabelbaum. Vorteilhaft ist es hierdurch möglich, einen Kabelbaum der sich im Nassbereich befindet in den Trockenbereich zu überführen. Die Versorgung von elektrischen Geräten, die sich im Nassbereich befinden, ist hierdurch besonders unkompliziert realisiert. Ein solcher Kabelbaum kann für die Montage an die Karosserie der Fahrzeugtür vormontiert werden und wird bei der Montage der Dichtebene zwischen die überlappenden Enden gelegt.

Eine aufwendige Montage, bei der ein solcher Kabelbaum oder ein Kabel durch ein Loch einer Dichtebene geführt werden muss, entfällt.

Weiterhin ist bevorzugt die Dichtebene an der Türinnenverkleidung vormontiert. Hierdurch ist der Bau der erfindungsgemäßen Fahrzeugtür noch weiter vereinfacht und die Montagezeit wird weiter reduziert. Beispielsweise ist die Dichtebene zusammen mit der Türinnenverkleidung als Verbundteil herstellbar. Als Verbundteil soll dabei verstanden werden, wenn ein Bauteil aus zwei unterschiedlichen Materialien besteht, beispielsweise aus Kunststoff bzw. Plastik und einer Dekorschicht (Türinnenverkleidung und Dichtebene sind folglich ein Bauteil). Es ist jedoch auch denkbar, dass die Dichtebene nur an die Türinnenverkleidung angebracht wird, beispielsweise durch Befestigungsmittel oder durch kleben. In letzten Fall werden beide Bauteile (Türinnenverkleidung und Dichtebene) bevorzugt getrennt hergestellt und anschließend zusammengefügt und als vormontiertes Bauteil geliefert. Denkbar ist jedoch auch, dass die Dichtebene eine Art Folie ist, die an die Innenverkleidung angeklebt wird.

Bevorzugt weist die Dichtebene Erhebungen und Vertiefungen auf. Durch eine solche Strukturierung der Dichtebene ist es vorteilhaft möglich, dem Dichtelement und/oder dem Kabel einen Halt auf der Dichtebene zu geben. Des weiteren ist bei der Aufbringung des Dichtelements in einer Erhebung oder einer Vertiefung genau festgelegt, wo das Dichtelement verlaufen soll. Starke Abweichungen bei dem Verlauf des Dichtelements und damit mögliche Schwierigkeiten bei der Montage, können so vermieden werden.

Besonders bevorzugt weist das Kabel oder der Kabelbaum eine Dichtungsmanschette auf. Durch die Dichtungsmanschette wird ein Übertritt von Wasser in den Trockenbereich der Fahrzeugtür verhindert. Je nach gewähltem Material oder Dicke der Dichtungsmanschette ist ein Toleranzausgleich möglich, da der Abstand, den die beiden überlappenden Enden des Dichtungselements zueinander haben, unterschiedlich ausfallen können. Bevorzugt weist die Dichtungsmanschette zusammen mit dem Kabel einen größeren Durchmesser auf, als der Abstand der beiden überlappenden Enden des Dichtelements zueinander ist. Durch ein leichtes zusammendrücken der Dichtungsmanschette wird eine Abdichtung des Übergangs (Nass zu Trocken) besonders wirkungsvoll. Bevorzugt ist die Dichtungsmanschette einfach über das Kabel ziehbar.

Weiterhin bevorzugt sind die überlappenden Enden des Dichtelements im oberen Bereich der Fahrzeugtür angeordnet. Mit dem oberen Bereich ist dabei der Bereich unterhalb der Seitenscheibe gemeint.

Bevorzugt besteht das Dichtelement aus geschäumten, synthetischen Gummi oder aus einem thermoplastischen Elastomer. Der Fachmann versteht, dass auch weitere Dichtstoffe verwendet werden können, die wasserabweisende Eigenschaften besitzen und verformbar sind.

Vorzugsweise ist das Dichtelement durch Aufkleben, Aufstecken oder Aufextrudieren an der Dichtebene befestigt. Insbesondere die Möglichkeit des Aufextrudierens ermöglicht hierbei eine einfache Herstellung der erfindungsgemäßen Dichtebene. Es ist jedoch auch denkbar, dass das Dichtelement durch Siegeln an der Dichtebene befestigt ist.

Die Erfindung wird nachfolgend anhand von Figuren erläutert. Diese Erläuterungen sind lediglich beispielhaft und schränken den allgemeinen Erfindungsgedanken nicht ein.
- Figur 1: zeigt schematisch den Aufbau der erfindungsgemäßen Fahrzeugtür.
- Figur 2: zeigt schematisch eine Dichtebene mit einem Dichtelement.
- **Figur 3**: zeigt schematisch die Dichtebene mit Erhebungen und Vertiefungen.

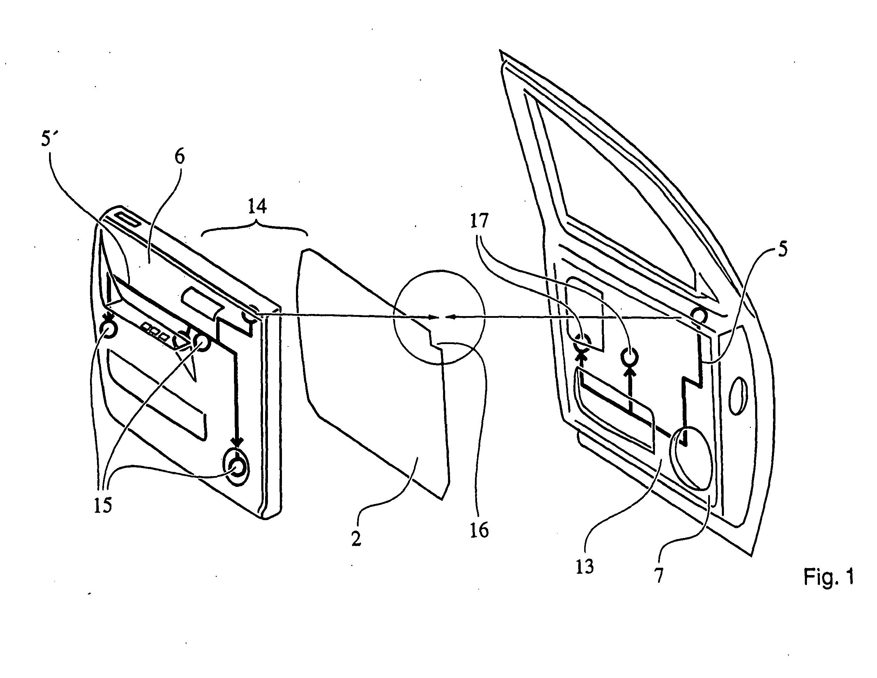

In der Figur 1 ist schematisch der Aufbau einer Fahrzeugtür mit einer Dichtebene 2 dargestellt. Im Ausführungsbeispiel wird an einer Türinnenverkleidung 6 die Dichtebene 2 befestigt. Es ist jedoch auch denkbar, dass die Türinnenverkleidung 6 und die Dichtebene 2 als ein Verbundteil gefertigt sind. Auf der Rückseite der Dichtebene 2 (in Figur 1 vom Betrachter nicht sichtbar) befindet sich ein Dichtelement 3 (in Figur 1 nicht dargestellt). Die Türinnenverkleidung 6 und die Dichtebene 2 können als ein vormontiertes Bauteil geliefert werden und zusammen an die Karosserie 7 angebracht werden. Die Karosserie 7 bildet den Nassbereich 13 der Fahrzeugtür und kann beispielsweise aus einem Innenblech und einem Außenblech bestehen. Die Feuchtigkeit die sich im Nassbereich 13 befindet, kann sich durch die wasserundurchlässige Dichtebene 2 nicht weiter in Richtung Türinnenverkleidung 6 ausbreiten. Daher bilden die Dichtebene 2 und die Türinnenverkleidung 6 zusammen den Trockenbereich 14 der Fahrzeugtür. Die Türinnenverkleidung 6 weist Verbraucher 15 für den Trockenbereich 14 auf. Die Verbraucher 15 sind im Ausführungsbeispiel mit einem Kabelbaum 5' für den Trockenbereich 14 verbunden. Die Karosserie 7 weist Verbraucher 17 für den Nassbereich 13 auf. Die Verbraucher 17 für den Nassbereich 13 sind mit einem Kabelbaum 5 für den Nassbereich 13 verbunden. Der Kabelbaum 5 für den Nassbereich 13 wird mittels eines Übergangs 16, den die Dichtebene 2 aufweist, mit dem Kabelbaum 5' der sich im Trockenbereich 14 befindet verbunden. Eine einzelne Verbindung der Verbraucher 15, 17 miteinander ist nicht notwendig. Somit muss die Dichtebene 2 keine Löcher oder Aussparungen aufweisen in denen einzelne Kabel oder Kabelbäume 5, 5' geführt werden, damit eine Verbindung zwischen dem Nassbereich 13 einer Fahrzeugtür und dem Trockenbereich 14 einer Fahrzeugtür entsteht.

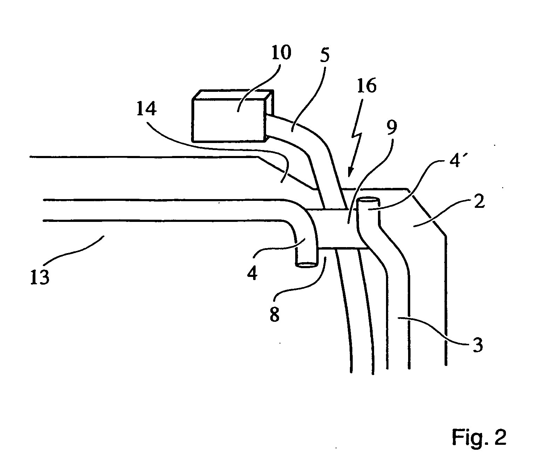

In der Figur 2 wird schematisch die Dichtebene 2 von einer bisher nicht dargestellten Seite gezeigt. Die in der Figur 2 dargestellte Seite befindet sich erfindungsgemäß zur Karosserie 7 gewand und war daher in der vorherigen Figur (Figur 1) nicht sichtbar. Die Dichtebene 2 weist ein langgestrecktes Dichtelement 3 auf, wobei sich die Enden 4, 4'des Dichtelements 3 überlappen. Die Enden 4, 4'des Dichtelements 3 bilden eine Art Kanal 8 in dem der Kabelbaum 5 geführt wird. Mittels des Übergangs 16 wird der Kabelbaum 5 von dem Nassbereich 13 in den Trockenbereich 14 überführt. Erfindungsgemäß ist es daher nicht notwendig, dass die Dichtebene 2 Löcher oder Aussparungen aufweist, durch die ein Kabel geführt wird. Der Kabelbaum 5 weist eine Dichtungsmanschette 9 auf, die ringförmig um den Kabelbaum 5 angeordnet ist. Durch die Überlappung der beiden Enden 4, 4'des Dichtelements 3 und der Dichtungsmanschette 9 wird das Eindringen von Wasser in den Trockenbereich 14 der Fahrzeugtür verhindert. Je nach Gestaltung der Dichtmanschette 9 (Material und Durchmesser der Dichtungsmanschette 9) kann durch die Dichtungsmanschette 9 ein Toleranzausgleich bezüglich des Abstandes den die beiden Enden 4, 4'des Dichtelements 3 zueinander haben bewirkt werden. Bevorzugt ist, wenn die Dichtungsmanschette 9 durch die beiden Enden 4, 4' leicht zusammengedrückt wird. Durch die Dichtebene 2 und das Dichtelement 3 ist es möglich, dass Teile des Kabelbaums 5 von einem Nassbereich 13 in einen Trockenbereich 14 überführt werden. Vorzugsweise handelt es sich daher bei dem Kabelbaum 5 um einen Nassraum - Kabelbaum und bei dem Teil, das in den Trockenbereich 14 überführt wird um einen Stecker 10. Durch den Stecker 10 kann der Kabelbaum 5 entweder direkt mit Strom versorgt oder mit einem anderen Kabelbaum 5' (in Figur 2 nicht dargestellt) aus dem Trockenbereich 14 verbunden werden. In beiden Fällen ist eine elektrische Verbindung von Geräten, die sich im Nassbereich 13 befinden, durch die Überführung von Teilen des Kabelbaums 5 möglich.

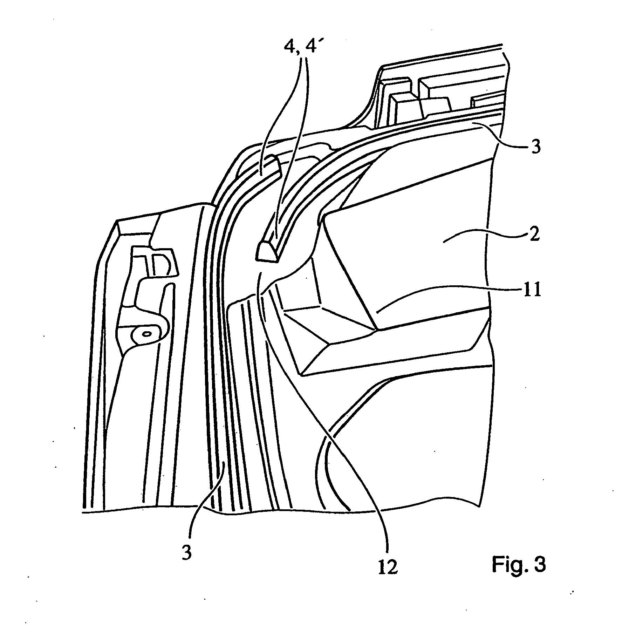

Die Figur 3 zeigt schematisch die Dichtebene 2 mit dem Dichtelement 3. Die Dichtebene 2 weist dabei Erhebungen 11 und Vertiefungen 12 auf, durch die das Dichtelement 3 und/oder der Kabelbaum 5 einen Halt bekommen. Unter Halt soll dabei verstanden werden, wenn das Dichtelement 3 und/oder der Kabelbaum 5 nicht seitlich verrutschen können. Einer falschen Platzierung des Dichtelements 3 oder des Kabelbaums 5 wird hierdurch vorgebeugt.

### Bezugszeichenliste

- 2: Dichtebene
- 3: Dichtelement
- 4: Ende Dichtelement
- 4': Ende Dichtelement
- 5: Kabel / Kabelbaum (Nassbereich)
- 5': Kabel / Kabelbaum (Trockenbereich)
- 6: Türinnenverkleidung
- 7: Karosserie
- 8: Kanal
- 9: Dichtungsmanschette
- 10: Stecker
- 11: Erhebung (Dichtebene)
- 12: Vertiefung (Dichtebene)
- 13: Nassbereich
- 14: Trockenbereich
- 15: Verbraucher (Trockenbereich)
- 16: Übergang
- 17: Verbraucher (Nassbereich)

## Patentansprüche

1. Fahrzeugtür mit Dichtebene (2), wobei die Dichtebene ein Bauteil ist, das zwischen einer Karosserie der Fahrzeugtür und der Innenverkleidung der Fahrzeugtür angebracht ist, wobei durch die Dichtebene (2) ein Nassbereich (13) der Fahrzeugtür von einem Trockenbereich (14) der Fahrzeugtür getrennt ist, wobei die Dichtebene (2) ein langgestrecktes Dichtelement (3) aufweist oder das Dichtelement (3) an der Dichtebene (2) befestigt ist, wobei sich die Enden (4, 4') des langgestreckten Dichtelements (3) im Wesentlichen überlappen, **dadurch gekennzeichnet, dass** zwischen den überlappenden Enden (4, 4') des langgestreckten Dichtelements (3) ein Funktionselement geführt wird."

2. Fahrzeugtür nach Anspruch 1, **dadurch gekennzeichnet, dass** das Funktionselement mindestens ein Kabel (5) umfasst.

3. Fahrzeugtür nach einem der vorhergehenden Ansprüchen, **dadurch gekennzeichnet, dass** die Dichtebene (2) an einer Türinnenverkleidung (6) vormontiert ist.

4. Fahrzeugtür nach einem der vorhergehenden Ansprüchen, **dadurch gekennzeichnet, dass** die Dichtebene (2) im wesentlichen als ein durchgehendes Bauteil ohne Löcher oder Aussparungen vorgesehen ist.

5. Fahrzeugtür nach einem der vorhergehenden Ansprüchen, **dadurch gekennzeichnet, dass** die Dichtebene (2) Erhebungen (11) und Vertiefungen (12) aufweist.

6. Fahrzeugtür nach Anspruch 2 und einem der Ansprüche 3 bis 5, **dadurch gekennzeichnet, dass** das Kabel (5) eine Dichtungsmanschette (9) aufweist.

7. Fahrzeugtür nach einem der vorhergehenden Ansprüchen, **dadurch gekennzeichnet, dass** die überlappenden Enden (4, 4') des Dichtelements (3) im oberen Bereich der Fahrzeugtür angeordnet sind.

8. Fahrzeugtür nach einem der vorhergehenden Ansprüchen, **dadurch gekennzeichnet, dass** das Dichtelement (3) aus geschäumten synthetischen Gummi oder thermoplastischen Elastomer besteht.

9. Fahrzeugtür nach einem der vorhergehenden Ansprüchen, **dadurch gekennzeichnet, dass** das Dichtelement (3) auf die Dichtebene (2) aufklebbar, siegelbar, steckbar oder aufextrudiert ist.

## Claims

1. Vehicle door having a sealing plane (2), wherein the sealing plane is a component which is provided between a body of the vehicle door and the interior molding of the vehicle door, wherein a wet region (13) of the vehicle door is separated from a dry region (14) of the vehicle door by the sealing plane (2), wherein the sealing plane (2) has an elongate sealing element (3) or the sealing element (3) is fastened to the sealing plane (2), wherein the ends (4, 4') of the elongate sealing element (3) substantially overlap, **characterized in that** a functional element is guided between the overlapping ends (4, 4') of the elongate sealing element (3).

2. Vehicle door according to Claim 1, **characterized in that** the functional element comprises at least one cable (5).

3. Vehicle door according to one of the preceding claims, **characterized in that** the sealing plane (2) is preassembled on an interior door molding (6).

4. Vehicle door according to one of the preceding claims, **characterized in that** the sealing plane (2) is provided substantially as a continuous component without holes or cutouts.

5. Vehicle door according to one of the preceding claims, **characterized in that** the sealing plane (2) has elevations (11) and depressions (12).

6. Vehicle door according to Claim 2 and one of Claims 3 to 5, **characterized in that** the cable (5) has a sealing sleeve (9).

7. Vehicle door according to one of the preceding claims, **characterized in that** the overlapping ends (4, 4') of the sealing element (3) are arranged in the upper region of the vehicle door.

8. Vehicle door according to one of the preceding claims, **characterized in that** the sealing element (3) consists of foamed synthetic rubber or thermoplastic elastomer.

9. Vehicle door according to one of the preceding claims, **characterized in that** the sealing element (3) can be adhesively bonded, sealed or plugged, or is extruded onto the sealing plane (2).

## Revendications

1. Porte de véhicule avec plan d'étanchéité (2), le plan d'étanchéité étant un composant qui est placé entre une carrosserie de la porte de véhicule et l'habillage intérieur de la porte de véhicule, une zone humide (13) de la porte de véhicule étant séparée par le plan d'étanchéité (2) d'une zone sèche (14) de la porte de véhicule, le plan d'étanchéité (2) présentant un élément d'étanchéité (3) étiré en longueur ou bien l'élément d'étanchéité (3) étant fixé sur le plan d'étanchéité (2), les extrémités (4, 4') de l'élément d'étanchéité (3) étiré en longueur se chevauchant pour l'essentiel, **caractérisée en ce qu'**un élément fonctionnel est guidé entre les extrémités (4, 4') en chevauchement de l'élément d'étanchéité (3) étiré en longueur.

2. Porte de véhicule selon la revendication 1, **caractérisée en ce que** l'élément fonctionnel comprend au moins un câble (5).

3. Porte de véhicule selon l'une quelconque des revendications précédentes, **caractérisée en ce que** le plan d'étanchéité (2) est pré-monté sur un habillage intérieur de porte (6).

4. Porte de véhicule selon l'une quelconque des revendications précédentes, **caractérisée en ce que** le plan d'étanchéité (2) est prévu principalement sous forme d'un composant continu sans trous ou évidements.

5. Porte de véhicule selon l'une quelconque des revendications précédentes, **caractérisée en ce que** le plan d'étanchéité (2) présente des élévations (11) et des cavités (12).

6. Porte de véhicule selon la revendication 2 et l'une quelconque des revendications 3 à 5, **caractérisée en ce que** le câble (5) présente une garniture d'étanchéité (9).

7. Porte de véhicule selon l'une quelconque des revendications précédentes, **caractérisée en ce que** les extrémités (4, 4') en chevauchement de l'élément d'étanchéité (3) sont disposées dans la zone supérieure de la porte de véhicule.

8. Porte de véhicule selon l'une quelconque des revendications précédentes, **caractérisée en ce que** l'élément d'étanchéité (3) est à base de caoutchouc synthétique moussé ou d'élastomère thermoplastique.

9. Porte de véhicule selon l'une quelconque des revendications précédentes, **caractérisée en ce que** l'élément d'étanchéité (3) peut être collé, scellé, inséré ou extrudé sur le plan d'étanchéité (2).
